# FASCICULE DE BREVET EUROPEEN

(11) **EP 4 474 184 B1**
(45) Date de publication et mention de la délivrance du brevet: **04.03.2026**
(21) Numéro de dépôt: 24172215.6
(22) Date de dépôt: 24.04.2024
(51) Int. Cl.: B60J 7/12, B60J 7/00

(54) **TOIT OUVRANT DE VÉHICULE À PROTECTION DU MOYEN DE FERMETURE ET VÉHICULE ÉQUIPÉ D'UN TEL TOIT**
ÖFFNUNGSFÄHIGES FAHRZEUGDACH MIT EINEM VERSCHLUSSMITTELSCHUTZ UND FAHRZEUG MIT EINEM SOLCHEN DACH
VEHICLE SUNROOF WITH PROTECTION OF THE LOCKING MEANS AND VEHICLE WITH SUCH A ROOF

(30) Priorité: 08.06.2023 FR 2305779
(43) Date de publication de la demande: 11.12.2024
(73) Titulaire: Stellantis Auto SAS, 78300 Poissy (FR)
(72) Inventeur: DI BELLO, MARCO, 78990 ELANCOURT (FR)
(74) Mandataire: BCIP

(56) Documents cités:
- DE-U1- 9 214 821
- GB-A- 2 116 917
- US-A- 4 639 035

## Description

L'invention concerne un toit ouvrant de véhicule ainsi qu'un véhicule équipé d'un tel toit ouvrant.

Il est connu de réaliser un toit de véhicule ouvrant en toile. Un tel toit comporte classiquement une partie fixe, fixée au pavillon dudit véhicule, autour d'une ouverture réalisée dans ledit pavillon, et une partie mobile reliée à la partie fixe par une fermeture à glissière. La fermeture à glissière permet un démontage rapide de la partie mobile par rapport à la partie fixe. La partie mobile permet de fermer l'ouverture dans le pavillon.

Par exemple, le document US4639035 décrit un toit ouvrant en toile comportant une partie mobile et une partie fixe. La partie fixe est fixée à la structure du véhicule, notamment au pavillon du véhicule, reliée à la partie mobile par une fermeture à glissière. La fermeture à glissière permet de séparer la partie mobile de la partie fixe. Lorsque la partie mobile est fixée à la partie fixe, la fermeture à glissière est recouverte par une bande de tissu fixée sur la face du toit en toile orientée du côté extérieur du véhicule. Cette bande de tissu est fixée sur le bord de la partie mobile et est appliquée contre la partie fixe, maintenue contre la partie fixe par un système de fixation auto-agrippante, connue notamment sous le nom de marque « Velcro ». La fixation auto-agrippante évite à la bande de tissu d'être relevée par le vent relatif lorsque le véhicule roule.

Le document GB2116917A également décrit un toit ouvrant en toile comportant une partie mobile et une partie fixe, reliée l'une à l'autre par une fermeture à glissière. Lorsque la partie mobile est fixée à la partie fixe, la fermeture à glissière est recouverte par une bande de tissu fixée sur la face du toit en toile orientée du côté extérieur du véhicule.

L'inconvénient d'une telle solution est qu'elle nécessite d'ajouter une fixation auto-agrippante pour maintenir la bande de tissu contre la partie fixe et éviter que celle-ci ne soit relevée par le vent relatif lorsque le véhicule roule, notamment pour la partie orientée vers l'avant du véhicule. L'ajout d'une telle fixation auto-agrippante augmente le coût du toit ouvrant en toile. De plus, les fixations auto-agrippantes peuvent retenir de la poussière et autres corps étrangers jusqu'à ne plus assurer une fixation fiable.

L'objectif de l'invention est de remédier à ces inconvénients. En particulier, un des buts de l'invention est de proposer un toit ouvrant en toile comportant une protection pour assurer l'étanchéité d'une fermeture tout en étant peu cher, simple à réaliser.

Ce but est atteint selon l'invention, grâce à un toit ouvrant de véhicule en matériau souple comportant une partie fixe comprenant une ouverture, une partie mobile entre une position fermée dans laquelle ladite partie mobile ferme l'ouverture de la partie fixe et une position d'ouverture dans laquelle l'ouverture est libre, la partie mobile étant reliée à la partie fixe par un moyen de fermeture réversible le long d'au moins un bord de ladite partie mobile, dit bord transversal, lorsque ladite partie mobile est en position fermée, de sorte à permettre de libérer ledit bord transversal de la partie mobile de la partie fixe dans la position d'ouverture, le toit comporte en outre une bande de protection recouvrant ledit moyen de fermeture le long du bord transversal de la partie mobile lorsque la partie mobile est en position fermée, ladite bande de protection étant fixée le long de l'un de ces bords sur la partie fixe du toit ouvrant, remarquable en ce que la bande de protection est fixée à la partie fixe de manière discontinue sur au moins une partie de la longueur de ladite bande de sorte à former des zones de fixation entre lesquelles sont disposées des zones libres de fixation et à créer des canaux permettant à un liquide de s'évacuer de l'espace entre la bande de protection et le toit par les zones libres de fixation.

Ainsi avantageusement, lorsque le bord transversal est disposé à l'avant du toit ouvrant installé sur un véhicule roulant, l'avant étant pris dans le référentiel dudit véhicule, la bande de protection n'est pas relevée par le vent relatif lorsque le véhicule roule car elle est maintenue sur la partie fixe au niveau des zones de fixation, la partie fixe étant en avant de la partie mobile. Ainsi, la bande de protection reste au dessus du moyen de fermeture sur le bord transversal, le recouvrant et le protégeant, même lorsque le véhicule roule. De plus, la présence de zones libre entre les zones de fixation permet une évacuation de liquide, tel que de l'eau, ruisselant sur la partie mobile vers la partie fixe, et évite son accumulation sont la bande de protection, évitant les risques d'infiltration au niveau du moyen de fermeture. De plus, cette solution évite de recourir à des fixations auto-agrippantes pour maintenir la bande de protection contre le toit et donc les risques de dégradation de ce type de fixation dans le temps.

Dans un mode de réalisation préféré de l'invention, la fixation de la bande de protection sur la partie fixe dans la zone de fixation est réalisée par une couture.

Ainsi avantageusement, la fixation est obtenue par un moyen de fixation simple et rapide à réaliser, notamment lorsque la bande de protection et le toit sont en tissu

Dans un autre mode de réalisation de l'invention, la bande de protection est distante de la partie fixe dans au moins une partie de la zone libre de sorte à créer un espace d'évacuation entre les zones de fixation.

Ainsi avantageusement, l'évacuation de liquide venant s'insérer entre la bande de protection et le toit fixe et le toit mobile est facilité.

Dans un autre mode de réalisation de l'invention, la partie mobile comporte deux bords longitudinaux disposés aux extrémités du bord transversal, lesdits bords longitudinaux s'étendant tous les deux du même côté du bord transversal, de sorte que la partie mobile soit encadrée au moins par le bord transversal et lesdits bords longitudinaux, le moyen de fermeture s'étendant le long des bords longitudinaux et du bord transversal de sorte fixer la partie mobile à la partie fixe lorsque la position mobile est en position fermée.

Ainsi avantageusement, l'ouverture obtenue une fois la partie mobile en position d'ouverture, est de grande dimension, et le toit mobile en position ouverture peut être enroulé sur lui-même pour dégager l'ouverture dans le toit. De préférence, le moyen de fermeture s'étend de manière continue le long du bord transversal et des bords longitudinaux.

Dans un mode de réalisation particulier de l'invention, le toit comporte deux bandes de protection longitudinales recouvrant chacune le moyen de fermeture respectivement le long de chacun des bords longitudinaux lorsque la partie mobile est en position fermée.

Ainsi avantageusement, le moyen de fermeture le long des bords longitudinaux est protégé par les bandes de protections longitudinales.

Dans un mode de réalisation particulier de l'invention, chacune des bandes de protection longitudinales est fixée à la partie mobile.

Dans un autre mode de réalisation particulier de l'invention, la partie mobile est reliée de manière non démontable à la partie fixe le long d'un bord de maintien s'étendant entre les extrémités des bords longitudinaux opposées au bord transversal.

Ainsi avantageusement, la partie mobile peut être roulé pour ouvrir le toit ouvrant tout en restant fixé au toit ouvrant par le bord maintien.

Dans un autre mode de réalisation de l'invention, le moyen de fermeture est une fermeture à glissière.

Ainsi avantageusement, le moyen de fermeture est un moyen simple et rapide à utiliser.

L'invention porte également sur un véhicule comportant un pavillon avec un trou, et un toit tel que décrit précédemment dont la partie fixe est fixée au pavillon dudit véhicule avec l'ouverture en vis-à-vis du trou dans le pavillon, la partie mobile en position fermée étant en vis-à-vis dudit trou.

Dans un mode de réalisation particulier du véhicule, dans lequel le bord transversal de la partie mobile est disposé du côté de l'avant du véhicule, s'étendant transversalement au véhicule, et les bords longitudinaux s'étendant vers l'arrière du véhicule dans la direction longitudinale du véhicule.

Ainsi avantageusement, la partie mobile peut être ouverte et rangée en l'enroulant vers l'arrière du véhicule, et donc en arrière de l'ouverture.

L'invention sera mieux comprise à la lecture de la description qui va suivre, donnée uniquement à titre d'exemple et faite en se référant aux dessins annexés, sur lesquels :
[Fig.1] représente une vue en perspective d'un véhicule comportant un toit ouvrant suivant l'invention.
[Fig.2] représente une vue en perspective d'un toit ouvrant de véhicule suivant l'invention.
[Fig.3] représente une vue suivant la section A-A illustrée en figure 2
[Fig.4] représente une vue suivant la section B-B illustrée en figure 2
[Fig.5] représente une vue suivant la section C-C illustrée en figure 2

Les dessins sont des représentations schématiques pour faciliter la compréhension de l'invention. Les composants ne sont pas forcément représentés à l'échelle. Les mêmes références correspondent aux mêmes composants d'une figure à l'autre.

L'axe X représente la direction longitudinale du véhicule, l'axe Y la direction transversale et l'axe Z la direction verticale. Les directions avant, arrière, haut, bas sont prises dans le référentiel du véhicule.

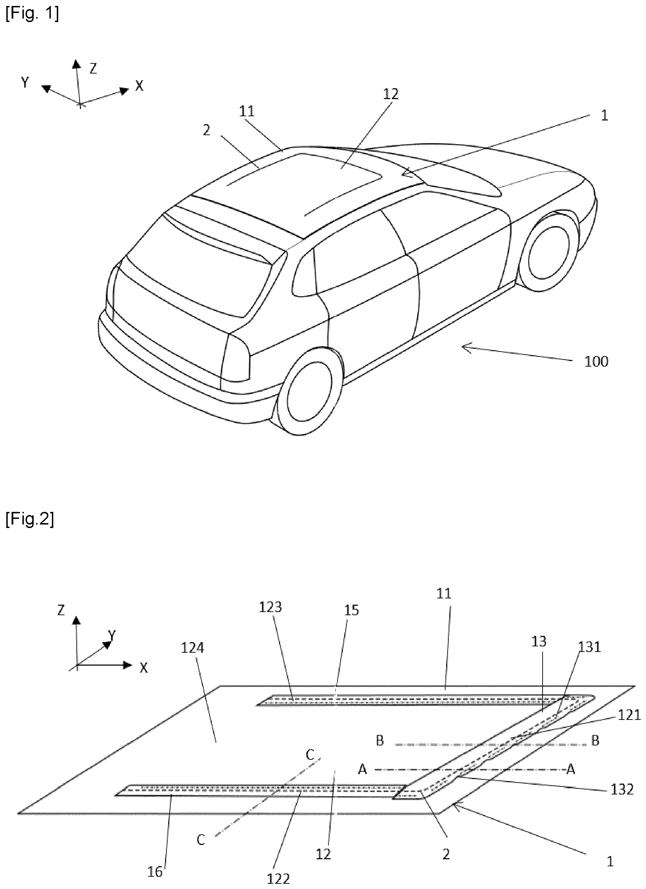

La figure 1 illustre un véhicule 100 comportant un pavillon avec un toit ouvrant 1. Le toit ouvrant recouvre un trou (non illustré) dans le pavillon du véhicule 1. Le toit ouvrant comporte une partie fixe 11 fixée au pavillon. La partie fixe 11 comporte une ouverture fermée par une partie mobile 12 en position fermée. La partie mobile 12 comporte en outre une position d'ouverture dans laquelle l'ouverture dans la partie fixe 11 est libre, c'est-à-dire dire non fermée par la partie mobile 12.

Comme illustré dans la figure 2, la partie mobile 12 est reliée à la partie fixe 11 par un moyen de fermeture 2 réversible le long d'au moins un bord de ladite partie mobile 12, dit bord transversal 121, lorsque ladite partie mobile 12 est en position fermée, de sorte à permettre de libérer ledit bord transversal 121 de la partie mobile 12 de la partie fixe 11 dans la position d'ouverture. C'est-à-dire que le moyen de fermeture 2 comporte un état verrouillé dans lequel la partie mobile 12 est fixé à la partie fixe 11 le long de son bord transversal 121, et un état déverrouillé dans lequel ledit bord transversal n'est pas fixé à la partie fixe 11.

Le toit comporte en outre une bande de protection 13 recouvrant ledit moyen de fermeture 2 le long du bord transversal 121 de la partie mobile 12 lorsque la partie mobile 12 est en position fermée. Ladite bande 13 est fixée sur l'un de ces bords à la partie fixe 11 du toit ouvrant, le long de l'ouverture. C'est-à-dire que la bande de protection 13 est fixée sur la partie fixe 11 le long d'une bordure de l'ouverture faisant face au bord transversal 121 de la partie mobile lorsque la partie mobile 12 est en position fermée.

La bande de protection 13 est fixée à la partie fixe 11 de manière discontinue sur au moins une partie de la longueur de ladite bande de protection 13 de sorte à former des zones de fixation 131 entre lesquelles sont disposées des zones libres 132 de fixation et à créer des canaux permettant à un liquide de s'évacuer de l'espace défini entre la bande de protection 13 et le toit 1, par les zones libres 132. Ainsi, si un liquide, tel que de l'eau de pluie, vient à couler et s'accumuler entre la bande de protection 13 et la partie fixe 1 et/ou la partie mobile 12, ledit liquide peut s'évacuer par les zones libres 132.

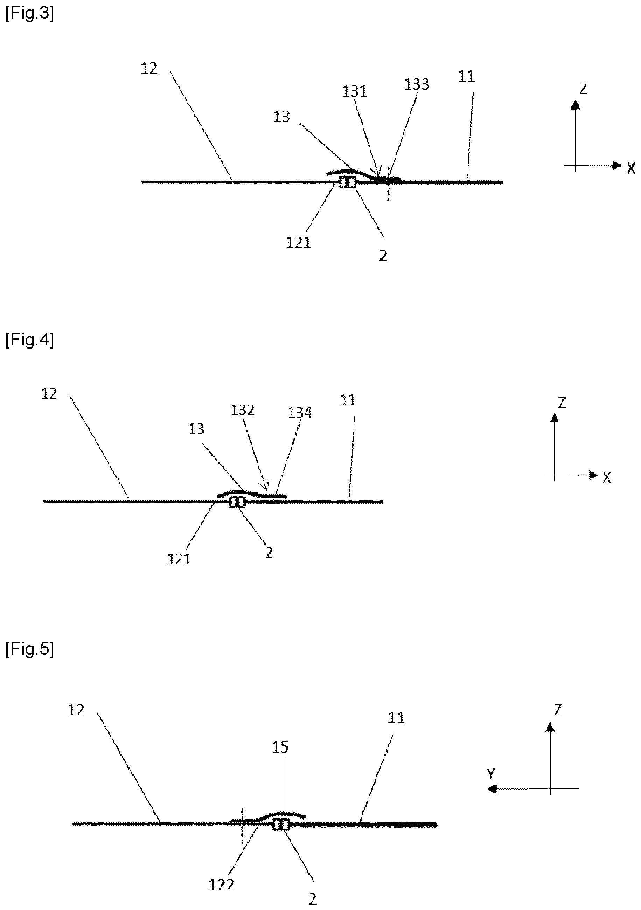

Comme illustré en figure 2 et en figure 3, la bande de protection 13 est fixée à la partie fixe 11 par plusieurs zones de fixation 131 séparées deux à deux par une zone libre 132. Autrement dit, il existe une succession de zones libres 132 et zones de fixation 131. Les zones de fixation 131 comportent par exemple des points de coutures 133 fixant la bande de protection 13 à la partie fixe 11 pour fixer la bande de protection 13 à la partie fixe 11.

Par exemple, les zones de fixation 131 s'étendent dans la direction principale de la bande de protection 13 sur une longueur supérieure à 2 cm, ou encore à 5 cm. Dans les figures, la direction principale de la bande de protection 13 correspond à la direction transversale Y du véhicule 1, et le bord transversal 121 s'étend lui-aussi dans cette même direction transversale Y. Les zones libres 132 s'étendent aussi par exemple dans la direction principale de la bande de protection 13, par exemple sur une longueur supérieure ou égale à 2 cm, ou encore à 5 cm. L'homme du métier adaptera ces longueurs en fonction des besoins d'écoulement et de résistance de la fixation à réaliser.

Dans les zones libres 132, la bande de protection 13 est distante de la partie fixe 11 de sorte à créer un espace d'évacuation 134 entre les zones de fixation 131, comme illustré en figure 4. C'est-à-dire que la bande de protection 13 ne touche pas la partie fixe 11 de sorte à créer un espace d'évacuation. Si un liquide, tel que de l'eau, s'accumule entre la bande de protection 13 et la partie fixe 11 ainsi que la partie mobile 12, il peut s'écouler en passant dans ce passage d'évacuation. Le canal ainsi formé est par exemple de hauteur maximale de 5 mm. La bande de protection 13 est donc au contact du toit fixe 11 dans les zones de fixation 131 et distante du toit fixe 11 dans les zones libres 132.

Comme illustré en figure 2, afin de pouvoir créer une ouverture de grande taille dans le toit ouvrant 1, la partie mobile 12 comporte deux bords longitudinaux 122, 123 disposés chacune aux extrémités du bord transversal 121. Ces bords longitudinaux 122, 123 s'étendant tous les deux du même côté du bord transversal 121, de sorte que la partie mobile 12 soit encadrée au moins par le bord transversal 121 et lesdits bords longitudinaux 122, 123. Le moyen de fermeture 2 s'étend le long des bords longitudinaux 122, 123 et du bord transversal 121 de sorte fixer la partie mobile 12 à la partie fixe 11 lorsque la partie mobile 12 est en position fermée. Autrement dit, les bords longitudinaux 122, 123 et le bord transversal suivent le pourtour de l'ouverture de la partie fixe 11 lorsque la partie mobile 12 est en position fermée. Deux bandes de protection longitudinales 15, 16 recouvrent chacune le moyen de fermeture 2 respectivement le long de chacun des bords longitudinaux 122, 123 lorsque la partie mobile 12 est en position fermée.

La partie mobile 12 est reliée de manière non démontable à la partie fixe 11 le long d'un bord de maintien 124 s'étendant entre les extrémités des bords longitudinaux 122, 123 opposées au bord transversal 121. Le toit 1 est ainsi formée d'une paroi souple d'un seul tenant comportant une découpe formant l'ouverture dans la partie fixe. La découpe crée le bord transversal 121 et les bords longitudinaux 122, 123 de la partie mobile 12. La découpe suit un tracé ouvert, tel que par exemple les trois bords d'un rectangle comme illustré en figure 2, de sorte à conserver un lien entre la partie mobile et la partie fixe le long du bord de maintien 124. Les bandes de protection 13, 15, 16 sont elles aussi en matériau souple. Par exemple, le toit ouvrant 1 et les bandes de protection 13, 15, 16 sont en tissu imperméable.

Dans le mode de réalisation de la figure 2, chacune des bandes de protection longitudinales 15, 16 est fixée à la partie mobile 12, comme illustré en figure 5. Dans le mode de réalisation présenté dans les figures, les bandes de protection longitudinales 15, 16 sont fixées de manière continue sur leur longueur.

Le moyen de fermeture est par exemple une fermeture à glissière, connue sous le nom de fermeture « Eclair », marque commerciale de l'entreprise « Éclair Prym ».

Comme illustré en figure 1, le bord transversal 121 est disposé du côté de l'avant du véhicule 100, s'étend transversalement au véhicule, et les bords longitudinaux 122, 123 s'étendent vers l'arrière du véhicule 100 dans la direction longitudinale X du véhicule.

## Revendications

1. Toit ouvrant (1) de véhicule (100) en matériau souple comportant une partie fixe (11) comprenant une ouverture, une partie mobile (12) entre une position fermée dans laquelle ladite partie mobile (12) ferme l'ouverture de la partie fixe (11) et une position d'ouverture dans laquelle l'ouverture est libre, la partie mobile (12) étant reliée à la partie fixe (11) par un moyen de fermeture (2) réversible le long d'au moins un bord de ladite partie mobile (12), dit bord transversal (121), lorsque ladite partie mobile (12) est en position fermée, de sorte à permettre de libérer ledit bord transversal (121) de la partie mobile (12) de la partie fixe (11) dans la position d'ouverture, le toit (1) comporte en outre une bande de protection (13) recouvrant ledit moyen de fermeture (2) le long du bord transversal (121) de la partie mobile (12) lorsque la partie mobile (12) est en position fermée, ladite bande de protection (13) étant fixée le long de l'un de ses bords sur la partie fixe (11) du toit ouvrant, **caractérisé en ce que** la bande de protection (13) est fixée à la partie fixe (11) de manière discontinue sur au moins une partie de la longueur de ladite bande (13) de sorte à former des zones de fixation (131) entre lesquelles sont disposées des zones libres (132) de fixation et à créer des canaux permettant à un liquide de s'évacuer de l'espace entre la bande de protection (13) et le toit (1) par les zones libres (132) de fixation.

2. Toit (1) suivant la revendication précédente, dans laquelle la fixation de la bande de protection (13) sur la partie fixe (11) dans la zone de fixation (131) est réalisée par une couture (133).

3. Toit (1) suivant l'une des revendications précédentes, dans laquelle la bande de protection (13) est distante de la partie fixe (11) dans au moins une partie de la zone libre (132) de sorte à créer un espace d'évacuation (134) entre les zones de fixation (131).

4. Toit (1) suivant l'une des revendications précédentes, dont la partie mobile (12) comporte deux bords longitudinaux (122, 123) disposés aux extrémités du bord transversal (121), lesdits bords longitudinaux (122, 123) s'étendant tous les deux du même côté du bord transversal (121), de sorte que la partie mobile (12) soit encadrée au moins par le bord transversal (121) et lesdits bords longitudinaux (122, 123), le moyen de fermeture (2) s'étendant le long des bords longitudinaux (122, 123) et du bord transversal (121) de sorte à fixer la partie mobile (12) à la partie fixe (11) lorsque la partie mobile (12) est en position fermée.

5. Toit (1) suivant la revendication précédente, comportant deux bandes de protection longitudinales (15, 16) recouvrant chacune le moyen de fermeture (2) respectivement le long de chacun des bords longitudinaux (122, 123) lorsque la partie mobile (12) est en position fermée.

6. Toit suivant la revendication précédente, dont chacune des bandes de protection longitudinales (15, 16) est fixée à la partie mobile (12).

7. Toit (1) suivant l'une des revendications 4 à 6, dont la partie mobile (12) est reliée de manière non démontable à la partie fixe (11) le long d'un bord de maintien (124) s'étendant entre les extrémités des bords longitudinaux (122, 123) opposées au bord transversal (121).

8. Toit (1) suivant l'une des revendications précédentes, dont le moyen de fermeture (2) est une fermeture à glissière.

9. Véhicule (100) comportant un toit (1) selon l'une des revendications précédentes, le véhicule comportant un pavillon avec un trou, la partie fixe (11) étant fixée au pavillon dudit véhicule (100) avec l'ouverture en vis-à-vis du trou dans le pavillon, et la partie mobile (12) en position fermée étant en vis-à-vis dudit trou.

10. Véhicule suivant la revendication précédente dont le toit ouvrant est suivant la revendication 4 combinée avec l'une des revendications de 1 à 8, dont le bord transversal (121) est disposé du côté de l'avant du véhicule (100), s'étendant transversalement au véhicule (100), et les bords longitudinaux (122, 123) s'étendant vers l'arrière du véhicule dans la direction longitudinale (X) du véhicule.

## Patentansprüche

1. Offendach (1) eines Fahrzeugs (100) aus flexiblem Material, das einen festen Teil (11) mit einer Öffnung, einen beweglichen Teil (12) zwischen einer geschlossenen Position, in der der bewegliche Teil (12) die Öffnung des festen Teils (11) verschließt, und einer offenen Position, in der die Öffnung frei ist, aufweist, wobei der bewegliche Teil (12) mit dem festen Teil (11) durch ein umkehrbares Verschlussmittel (2) entlang mindestens einer Kante des beweglichen Teils (12), der so genannten Querkante (121), verbunden ist, wenn Der bewegliche Teil (12) befindet sich in der geschlossenen Stellung, sodass die Querkante (121) des beweglichen Teils (12) des feststehenden Teils (11) in der geöffneten Stellung freigegeben werden kann, wobei das Dach (1) ferner ein Schutzband (13) aufweist, das das Verschlussmittel (2) entlang der Querkante (121) des beweglichen Teils (12) abdeckt, wenn sich das bewegliche Teil (12) in der geschlossenen Stellung befindet, wobei das Schutzband (13) entlang einer seiner Kanten am feststehenden Teil (11) des zu öffnenden Daches befestigt ist, **dadurch gekennzeichnet, dass** der Schutzstreifen (13) an dem feststehenden Teil (11) diskontinuierlich über mindestens einen Teil der Länge des Streifens (13) befestigt ist, um Befestigungszonen (131) zu bilden, zwischen denen freie Befestigungszonen (132) angeordnet sind, und um Kanäle zu schaffen, die es einer Flüssigkeit ermöglichen, aus dem Raum zwischen dem Schutzstreifen (13) und dem Dach (1) durch die freien Befestigungszonen (132) auszutreten.

2. Dach (1) nach dem vorhergehenden Anspruch, bei dem die Befestigung des Schutzstreifens (13) an dem feststehenden Abschnitt (11) in dem Befestigungsbereich (131) durch eine Naht (133) erfolgt.

3. Dach (1) nach einem der vorhergehenden Ansprüche, bei dem der Schutzstreifen (13) von dem festen Teil (11) in wenigstens einem Teil des freien Bereichs (132) so beabstandet ist, dass ein Auslassraum (134) zwischen den Befestigungsbereichen (131) entsteht.

4. Dach (1) nach einem der vorhergehenden Ansprüche, bei dem der bewegliche Teil (12) zwei Längsränder (122, 123) aufweist, die an den Enden des Querrandes (121) angeordnet sind, wobei die Längsränder (122, 123) sich beide auf derselben Seite des Querrandes (121) erstrecken, sodass der bewegliche Teil (12) zumindest von dem Querrand (121) und den Längsrändern (122, 123) eingerahmt ist, Verschlussmittel (2), die sich entlang der Längsränder (122, 123) und der Querkante (121) erstrecken, um das bewegliche Teil (12) an dem feststehenden Teil (11) zu befestigen, wenn das bewegliche Teil (12) in der geschlossenen Stellung ist.

5. Dach (1) nach dem vorhergehenden Anspruch, das zwei Längsschutzstreifen (15, 16) aufweist, die jeweils das Verschlussmittel (2) entlang jeder der Längsränder (122, 123) abdecken, wenn sich der bewegliche Teil (12) in der geschlossenen Position befindet.

6. Dach nach dem vorhergehenden Anspruch, bei dem jeder der Längsschutzstreifen (15, 16) an dem beweglichen Teil (12) befestigt ist.

7. Dach (1) nach einem der Ansprüche 4 bis 6, dessen bewegliches Teil (12) mit dem feststehenden Teil (11) entlang einer Haltekante (124) unlösbar verbunden ist, die sich zwischen den Enden der Längsränder (122, 123) erstreckt, die der Querkante (121) gegenüberliegen.

8. Dach (1) nach einem der vorhergehenden Ansprüche, dessen Verschlussmittel (2) ein Reißverschluss ist.

9. Fahrzeug (100) mit einem Dach (1) nach einem der vorhergehenden Ansprüche, wobei das Fahrzeug eine Decke mit einem Loch aufweist, wobei der feste Teil (11) an der Decke des Fahrzeugs (100) mit der Öffnung gegenüber dem Loch in der Decke befestigt ist, und wobei der bewegliche Teil (12) in der geschlossenen Position gegenüber dem Loch angeordnet ist.

10. Fahrzeug nach dem vorhergehenden Anspruch, dessen Schiebedach nach Anspruch 4 in Kombination mit einem der Ansprüche 1 bis 8 ist, dessen Querkante (121) an der Vorderseite des Fahrzeugs (100) angeordnet ist, sich quer zum Fahrzeug (100) erstreckt, und dessen Längskanten (122, 123) sich in Fahrzeuglängsrichtung (X) nach hinten erstrecken.

## Claims

1. Motor vehicle sunroof (1) (100) of flexible material comprising a stationary part (11) comprising an opening, a movable part (12) between a closed position in which said movable part (12) closes the opening of the stationary part (11) and an opening position in which the opening is unobstructed, the movable part (12) being connected to the stationary part (11) by a reversible closing means (2) along at least one edge of said movable part (12), called transverse edge (121), when said movable part (12) is in a closed position, so as to allow said transverse edge (121) of the movable part (11) to be released into the opening position, the protective roof (1) further comprising a protective strip) (13) covering said closure means (2) along the transverse edge (121) of the movable part (12) when the movable part (12) is in a closed position, said protective strip (13) being fixed along one of its edges to the stationary part (11) of the sunroof, wherein the protective strip (13) is fixed to the stationary part (11) discontinuously over at least a part of the length of said strip (13) so as to form fixing zones (131) between which are arranged free fixing zones (132) and to provide channels allowing a liquid to escape from the space between the protective strip (13) and the roof (1) via the free fixing zones (132).

2. Roof (1) according to the previous claim, in which the fixing of the protective strip (13) to the stationary part (11) in the fixing zone (131) is realised by a seam (133).

3. Roof (1) according to one of the previous claims, in which the protective strip (13) is spaced from the stationary part (11) in at least one part of the loose zone (132) so as to create an evacuation space (134) between the fixing zones (131).

4. The roof (1) according to claim 1, wherein the movable part (12) comprises two longitudinal edges (122, 123) disposed at the ends of the transverse edge (121), said longitudinal edges (122, 123) both extending on the same side of the transverse edge (121), such that the movable part (12) is framed at least by the transverse edge (121) and said longitudinal edges (122, 123), the closure means (2) extending along the longitudinal edges (122, 123) and the transverse edge (121) so as to fix the movable part (12) to the stationary part (12) when the movable part (1) is in a locked position.

5. Roof (1) according to the previous claim, comprising two longitudinal protective strips (15, 16) each covering the closing means (2) respectively along each of the longitudinal edges (122, 123) when the movable part (12) is in a closed position.

6. Roof according to the previous claim, each of the longitudinal protective strips (15, 16) of which is fixed to the mobile part (12).

7. Roof (1) according to one of Claims 4 to 6, the movable part (12) of which is connected in a non-removable manner to the fixed part (11) along a retaining edge (124) extending between the ends of the longitudinal edges (122, 123) opposite the transverse edge (121).

8. Roof (1) according to one of the previous claims, the closing means (2) of which is a zipper.

9. Vehicle (100) comprising a roof (1) according to one of the previous claims, the vehicle comprising a roof with a hole, the stationary part (11) being fixed to the roof of said vehicle (100) with the opening facing the hole in the roof, and the movable part (12) in a closed position facing said hole.

10. Vehicle according to the previous claim, the sunroof of which is according to Claim 4, in combination with one of Claims 1 to 8, the transverse edge (121) of which is arranged on the front side of the vehicle (100), extending transversely to the vehicle (100), and the longitudinal edges (122, 123) extending towards the rear of the vehicle in the longitudinal management (X) of the vehicle.
